(19) Europäisches Patentamt
European Patent Office
Office européen des brevets

(11) EP 0 726 229 A1

# (12) EUROPEAN PATENT APPLICATION

(43) Date of publication:
**14.08.1996 Bulletin 1996/33**

(51) Int Cl.6: **C01D 7/16**

(21) Application number: **96400272.9**

(22) Date of filing: **09.02.1996**

(84) Designated Contracting States:
**DE ES FR GB IT NL**

(30) Priority: **10.02.1995 AU PN1053/95**

(71) Applicant: **PENRICE PTY LTD**
**Osborne, South Australia 5017 (AU)**

(72) Inventors:
- **Zha, Fu-Fang**
  **School of Chem. Eng. & Ind. Chemistry**
  **Kensington, N.S.W 2033 (AU)**
- **Fane, Anthony G.**
  **School of Chem. Eng. & Ind. Chem.**
  **Kensington, N.S.W. 2033 (AU)**
- **Glen, John B.**
  **Osborne, South Australia 5017 (AU)**

(74) Representative: **Joly, Jean-Jacques et al**
**Cabinet Beau de Loménie**
**158, rue de l'Université**
**75340 Paris Cédex 07 (FR)**

## (54) Production of alkali metal bicarbonates and carbonates

(57) A method for the production of alkali metal bicarbonates or carbonates, such as sodium bicarbonate and soda ash is disclosed.

In the method. the alkali metal carbonate or bicarbonate is first formed by introducing carbon dioxide into an aqueous alkali metal salt solution. such as brine, which is maintained in contact with an organic amine-containing phase. Preferred amines for the organic phase are primary amines having about 12-24 carbon atoms. Alkali metal carbonate or bicarbonate is formed in the aqueous phase. By separating the aqueous phase from the organic phase, alkali metal carbonate or bicarbonate is readily recovered.

The organic phase. which contains an amine-inorganic acid complex is then subjected to a membrane treatment process to regenerate amine for reuse in the formation of the alkali metal carbonate or bicarbonate.

The membrane treatment process requires that the organic phase containing the amine-inorganic acid complex (25) be contacted with one face of a membrane (33) whilst an aqueous base (24), such as milk of lime, contacts the other face of the membrane.

In this way an amine-containing organic phase is regenerated for reuse.

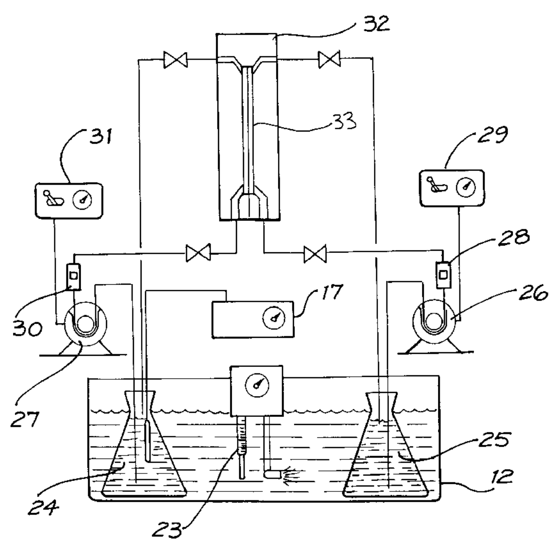


FIG. 3



Printed by Jouve, 75001 PARIS (FR)

## Description

Field of the Invention

This invention relates to methods for the production of alkali metal bicarbonates and carbonates, such as sodium carbonate and potassium carbonate, and more particularly to methods which utilise basic amines as a medium to convert sodium chloride into sodium bicarbonate with continuous injection of carbon dioxide.

Background to the Invention

Soda ash, also known as sodium carbonate, is obtained either from synthetic routes or from natural soda ash-containing brines and deposits. Nowadays, the dominant synthetic route for the production of soda ash in much of the world is the Solvay process (Ernest Solvay 1838-1922) or its variations. The continued success of the Solvay process is based on the raw materials, salt and limestone, being more readily available than natural alkali.

The conversion of the raw materials into soda ash can be represented by the overall chemical reaction:

$$2NaCl + CaCO_3 \rightarrow Na_2CO_3 + CaCl_2 \quad (1)$$

However, this reaction cannot be achieved in a single stage and normally requires a series of process steps. The synthetic route typically used comprises the following series of reactions:

$$NaCl + NH_3 \rightarrow \text{ammoniated brine} \quad (2)$$

$$\text{Ammoniated brine} + CO_2 \rightarrow NaHCO_3 \downarrow + NH_4Cl \quad (3)$$

$$2NaHCO_3 \xrightarrow{Heat} Na_2CO_3 + CO_2 + H_2O \quad (4)$$

$$2NH_4Cl + Ca(OH)_2 \xrightarrow{Heat} CaCl_2 + 2NH_3 \uparrow + 2H_2O \quad (5)$$

$$C + O_2 \rightarrow CO_2 + Heat \quad (6)$$

$$CaCO_3 \xrightarrow{Heat} CaO + CO_2 \quad (7)$$

$$CaO + H_2O \rightarrow Ca(OH)_2 + Heat \quad (8)$$

The above reaction (5) is the recovery of ammonia by the addition of lime. In the production of sodium bicarbonate, the filter liquor after filtration of bicarbonate contains unreacted sodium chloride and substantially all the ammonia with which the brine was originally saturated. Fixed ammonia (ammonium chloride) corresponds stoichiometrically to sodium chloride converted to sodium bicarbonate. The fixed ammonia must be freed and recycled to the absorber for further use. The recovery is usually achieved by reaction with milk of lime. Hot calcium chloride solution. containing residual ammonia in the form of ammonium hydroxide, flows back to a lower section of the distiller. Low pressure steam sweeps practically all of the ammonia out of the limed solution. The final distiller waste solution contains calcium chloride, unreacted sodium chloride, and excess line. This waste solution, traditionally after settling the suspended solids in large basins, is discharged into local waterways.

Although the Solvay process has been used for many years it suffers from a number of disadvantages.

Firstly, the regeneration of ammonia requires considerable energy inputs. The ammonia in this process undergoes the recycle of $NH_3$ (gas) $\rightarrow$ $NH_3$ (liquid) $\rightarrow$ $NH_3$ (gas). The energy requirement for the recovery of ammonia cannot be directly converted into product.

Secondly, the conversion reaction (3) is incomplete (generally $\leq$80%). The separation of the sodium bicarbonate from the chlorides is comparatively costly and the unreacted sodium chloride which is ultimately discharged with the waste solution means another costly loss of values.

The third disadvantage of the process is the large volumes of liquid waste produced containing suspended and dissolved solids. It is estimated that for every ton of product soda ash, nearly 10 cubic metres of liquid waste (ca 10 tons) are produced [1], This waste contains about one ton of calcium chloride, one-half ton of sodium chloride, and other soluble suspended impurities.

In realisation of the disadvantages of the Solvay process, many efforts have been made to develop new synthetic routes and to improve the ammonia recovery process in the production of soda ash. These processes include:

(a) Solvent Extraction with amines
(b) Solvent Extraction to produce soda ash and hydrochloric acid
(c) Combined preparation of chlorinated hydrocarbons and soda ash
(d) Production of alkali metal carbonates via ion exchange routes

It is evident from the literature that the major efforts to improve soda ash production have been mainly through (a) solvent extraction with amines and (d) the ion exchange route.

(a) Solvent extraction with amines

At the end of the 70's, Shibata et al at Kansai University in Japan investigated the application of solvent extraction to the production of sodium bicarbonate [2,3]. They employed high molecular weight alkylamines instead of ammonia in the Solvay process. The fundamental chemical reactions involved in the solvent extraction process are

$$NaCl + CO_2 + H_2O + \overline{Am} \leftrightarrow NaHCO_3 + \overline{AmHCl} \quad (9)$$

where $\overline{Am}$ indicates free amines and the top bars represent the organic phase. The amines could be easily regenerated from their complexes with HCl ($\overline{AmHCl}$) by the use of an aqueous base, such as $Ca(OH)_2$,

$$\overline{AmHCl} + OH \leftrightarrow \overline{Am} + Cl^{-} + H_2O \quad (10)$$

It was found that the more basic amines, higher dielectric constant solvents, and high concentrations of amine and NaCl would increase the yield of $NaHCO_3$. At higher temperature, the rate of reaction increased, but the absorption of $CO_2$ decreased.

This principle was further developed and disclosed in a number of patent applications. Toyo Soda Manufacturing Co., Ltd used a primary amine, 50% Primene JM-T in isa-BUCOMe 435, as an extractant [4]. The extractant and water as two phases were treated with $CO_2$ and then contacted with NaCl-$NaHCO_3$ (each saturated) solution. The amine complex could be regenerated with $Ca(OH)_2$ or $Mg(OH)_2$.

This company also disclosed the use of this technique for the recovery of ammonia in bicarbonate mother liquid from the Solvay process [5,6]. In this case, the ammonia was regenerated by transferring chloride ions into the organic phase. The amine complex was decomposed by reaction with calcium hydroxide (Reaction 10). Compared to the conventional distillation with $Ca(OH)_2$ in the Solvay process, NaCl in the liquor is utilised.

Solvay et Cie filed a series of patent applications which disclose the production of sodium bicarbonate by the amine routes [7-13]. In the amine routes, the difficulty of recovering the organic solution containing the regenerated amine is generally encountered. The regeneration of the amine by means of an aqueous calcium hydroxide suspension is in fact accompanied by the formation of a solid residue which interferes with the separation of the organic and aqueous solutions, and causes a substantial loss of regenerated amine.

Some of the disclosures by Ninane et al [7,8] proposed to overcome this disadvantage by providing a process which makes it possible to produce an organic solution of a water-insoluble base without substantial loss of the base to be produced.

Hussien and Zatout [14] obtained the best conditions for the complete replacement of $NH_3$ by octylamine. Under these conditions, a 73% conversion of NaCl to $NaHCO_3$ was achieved. A similar conversion was also obtained by Yang et al [15].

Solvent extraction with amines to directly produce bicarbonate was also extensively studied by Professor Shi et al at East China University of Chemical Technology [16-21]. They found that to make the carbonation reaction (Eq.9) take place, the basicity of amines used must be higher than a critical value. To characterise it quantitatively, the dissociation constant of the amine-HCl complex must satisfy $pH_a > 6.35$ [20]. The carbonation mechanism was further investigated. The water content in the amine organic phase can be divided into two parts: free and combined water. From the experimental results, it was concluded that the extractive complex was $R_3NHCl{\cdot}H_2O$, and its alcohol solvation number was 6 [21]. The carbonation reaction rate was controlled by the interfacial diffusion and the interfacial reactions [16].

(b) Production of alkali metal carbonates via ion exchange routes

In the production of alkali metal carbonates by ion exchange routes, ion exchange resins are used as a direct replacement of ammonia in the Solvay Processes and amines in the solvent extraction processes. Kunin [29] first disclosed and discussed the possibility of using ion exchange resins for the chemical synthesis of alkali metal salts. The chemical reactions involved are similar to the solvent extraction with amines. The only difference lies in the replacement of the amine in Eq.(9) with a weak base anion exchange resin. Kumin also pointed out that the quaternary

or strong anion exchange resins are of little use in this proposed process, because regeneration requires caustic and the selectivities are too low.

Using ion exchange resins for the production of alkali metal carbonates was further described in a patent application by Klipfontein in South Africa [23]. A weak-base resin (R-N) is carbonated first to give a complex R-$NH_2CO_3$ and then contacted with sodium chloride solution for exchange of $Cl^-$ for $HCO_3^-$ and recovery of $NaHCO_3$ solutions:

$$R - NH_2CO_3 + NaCl \leftrightarrow R - NHCl + NaHCO_3 \quad (12)$$

The resin is regenerated with a $Ca(OH)_2$ solution and subsequently treated with $CO_2$. A pair of continuous ion exchange columns were used, the first to convert NaCl to $NaHCO_3$ and the second for the conversion of R-NHCl to free-base form followed by carbonation. A 94% conversion of NaCl to $NaHCO_3$ plus a small amount of $Na_2CO_3$ was obtained.

In the processes described by Kunin [22] and Giddey [23], heat treatment of sodium bicarbonate is required to obtain sodium carbonate. A method of directly producing an alkali metal carbonate was proposed in a recent patent application by Brunner Mond Co. Ltd [24]. The method of this invention relies on the use of a solid ion exchange resin which, in the aqueous environment of the reaction, is capable of retaining chloride ions and has a basicity greater than that of the bicarbonate ion. The chemical reaction effected may be represented by the following overall equation:

$$R - N(resin) + NaCl + NaHCO_3 \leftrightarrow R - NHCl + Na_2CO_3 \quad (13)$$

Since the ion exchange resin is a polymeric, solid and insoluble material, the product of the alkali metal carbonate is readily recoverable from the resin without any significant energy requirement. Additionally, since the resin may be separated easily from the product, virtually all of the alkali metal chloride may be converted to the product. Moreover, the reaction may be effected at ambient temperature thus avoiding the use of heat for the conversion of bicarbonate to carbonate.

In the ion exchange route, the activation and regeneration of the resins add more stages to the process and usually have greater cost requirements.

In the solvent extraction route with amines, the organic amine extractant and the aqueous brine are mixed intimately, then separated by coalescence into two phases. In the mixing process there are problems of backmixing, foam generation and possible emulsion formation which reduce the mass transfer rate and subsequently prevent complete phase separation. These problems are especially serious in the regeneration of amine-hydrochloric acid complex with milk of lime, where the formation of a third emulsion phase containing some of the organic phase has been found.

Although, improvements have been made to reduce amine loss, it is considered that amine and solvent losses and a low degree of conversion combine such that solvent extraction is too costly.

The present inventors have focussed on improving the solvent extraction route, in particular with a view to achieving a process which reduces amine and solvent losses whilst having a suitable degree of conversion.

## Summary of the Invention

Accordingly, the present invention consists in a method of producing an alkali metal bicarbonate or carbonate comprising:

(a) introducing carbon dioxide into an aqueous solution of an alkali metal salt in contact with an organic amine-containing phase so as to form an alkali metal bicarbonate or carbonate in the aqueous phase and an amine inorganic acid complex in the organic phase;
(b) separating the organic phase from the aqueous phase;
(c) recovering the alkali metal bicarbonate or carbonate from the aqueous phase; optionally
(d) converting the so-recovered alkali metal bicarbonate into an alkali metal carbonate; and
(e) contacting one face of a membrane with the organic phase whilst contacting the other face of the membrane with an aqueous base so as to regenerate an amine-containing organic phase from the amine inorganic acid complex for use in (a).

## Description of the Invention

The invention will now be described with particular reference, but not limited to the production of soda ash.

A variety of alkali metal salts may be used depending on the nature of the alkali metal carbonate or bicarbonate required. For the production of soda ash, the preferred alkali metal salt (in aqueous solution) is brine.

The organic phase must include an amine of which primary amines are preferred, especially those having about 12-24 carbon atoms.

In addition to an amine, other additives may be included in the organic phase. For example, an alcohol may be used to improve separation of phases and reduce emulsion formation. An aliphatic hydrocarbon may be included to reduce viscosity and improve flow characteristics thereby resulting in improved mixing, increased rate of extraction and improved phase separation.

Preferably the aliphatic alcohol contains greater than about 4 carbon atoms. Particularly preferred is octanol.

When an aliphatic hydrocarbon is used, preferably it contains about 12 carbon atoms or less. most preferably 7-12. Conveniently, industrial mixtures of hydrocarbons will be used, such as kerosene.

The aqueous phase and organic phase are preferably mixed to ensure maximum contact during the introduction of the carbon dioxide. This is to ensure that the conversion reaction is completed in the minimum time and the amine-acid complex is taken up in the organic phase.

Introduction of carbon dioxide into the mixture may be readily accomplished by methods well known in the art. For example, the carbon dioxide may be introduced as a gas directly into the lower portion of a vessel containing the mixture of the two phases. The organic phase and the aqueous phase are then separated by for example decanting. Other methods well known in the art may, however, be used.

Following separation of the organic and aqueous phases, the organic phase is subjected to a stripping process using a membrane to regenerate the amine-containing organic phase for reuse. On one side of the membrane. the amine-acid complex containing organic phase is disposed whilst on the other side there is an aqueous base. Preferred aqueous bases include magnesia and milk of lime. Particularly preferred is milk of lime.

A range of membranes may be used, preferably of pore size about 0.01 - 0.5 microns most preferably about 0.05 - 0.3 microns.

In general terms, membranes may be symmetric or asymmetric.

The selection of a suitable membrane will additionally be based on a number of characteristics including:

- a preference for hydrophilic membranes particularly highly hydrophilic membranes so as to maximise mass transfer; although hydrophobic membranes can be used. In this latter case, a higher pressure differential across the membrane may be tolerated but the mass transfer is reduced. Examples of hydrophilic membranes include PVDF, Teflon, polypropylene (all appropriately modified to be hydrophilic) and PES (polyether sulfone/sulfonated polyether sulfone)
- compatibility, durability and dimensional stability in use, including a preference for chemical non-reactivity of the membrane used
- suitability for cleaning, particularly to remove scale build-up and crystal growth
- suitable wettability i.e. substantially all of the pores are wet by the chosen phase
- an irregular pore morphology to improve wetting characteristics of one phase and reduce break-through of the non-wetting phase. In present terminology, the preferred morphology is described as "sharp-edge" morphology.
- transmembrane pressure ideally should be minimised so as to minimise penetration of pores. Generally a membrane should be able to withstand up to about 100kPA although in operation, generally the maximum will be about 50 kPA. It should be understood that transmembrane pressure is distinct from mechanical pressure which is much greater and could be 500 kPA or higher.
- porosity of membranes should be as high as possible, typically 70% or higher.
- wall thickness of a membrane will generally be 25-500 microns. In general terms, a thinner wall thickness will give faster mass transfer, although if the wall is too thin, penetration by the non-wetting phase may occur. Preferably, the wall thickness is 50-200 microns.

On an industrial scale, it is preferred to use membranes of high surface area/unit volume, examples of which are hollow fibre membranes.

Hollow fibre membranes are also preferred as they have superior dimensional stability. However, it should be understood that membranes other than hollow fibres could be used.

When selecting hollow fibre membranes, it should be appreciated that the inner diameter should not be too small or otherwise blockage will occur. Similarly. if the inner diameter is too large, the specific membrane area is reduced ie. surface area/unit volume.

To improve operating stability, with fluctuating transmembrane pressure, composite membranes may be used comprising a hydrophilic substrate with a hydrophobic top layer.

Prior to the step of regeneration of the amine, when milk of lime or magnesia are used as the aqueous base, it is desirable to reduce carbon dioxide and carbon dioxide species in the organic amine-containing phase. This is done so as to minimise the formation of carbonate precipitate which contributes to membrane fouling. A variety of procedures well known in the art may be used to remove carbon dioxide and carbon dioxide species including degassing by injection of nitrogen or air, vacuum degassing, steam stripping and washing with water.

Another procedure that may be used is to contact the organic amine-containing phase with brine. This may be

saturated brine at about 5.2M which is used as the feed solution. This assists in the substantial removal of carbonates. In the event that dissolved carbon dioxide remains after treatment with brine, vacuum degassing or water washing may be used.

This procedure using brine is desirable as it reduces the amount of waste water which would otherwise be produced.

On completion of regeneration, the amine is recovered for re-use.

The successful regeneration of the amine using membranes is critical to the operation of the process since overall efficiency is predicated on the continued reuse of the amine in the initial extraction step.

Once the sodium bicarbonate has been formed it is separated within the aqueous phase from the organic phase. This may be readily achieved by processes well known in this art such as by decanting.

Similarly, conversion of the sodium bicarbonate to soda ash may be readily effected by well known processes in this art.

In order to better understand the nature of this invention, a number of examples relating to the preparation of sodium bicarbonate will now be described.

## Examples

### Reagents

Commercial primary amine, Primene JM-T, was purchased from Rohm and Haas Co. The amine concentration in Primene JM-T was experimentally determined as 2.56 mol/L or 3.07 mol/kg.

The brine solution was prepared by dissolving sodium chloride crystal in demineralised water. The milk of lime was obtained by mixing certain amounts of solid calcium hydroxide and water or by dissolving industrial lime in water.

### General Experimental Procedure

Solvent extraction experiments were conducted in the stirred cell shown schematically in Figure 1, the features of which are as follows:-

10. - carbon dioxide cylinder
11. - rotameter to determine carbon dioxide flow
12. - water bath to control temperature
13. - reaction cell
14. - stirrer
15. - thermometer to measure temperature of reaction
16. - pH electrode immersed in reaction mixture
17. - pH meter to measure pH of reaction.

The inner diameter of the cell 13 was 44mm and the height 90mm. Certain volumes of brine and organic extractant (usually 25 ml brine, the volume of extractant according to the phase ratio) were introduced into the cell 13. The cell 13 was then immersed in a water bath 12 of constant temperature. Carbon dioxide 10 was injected into the mixture from the bottom of the cell. The flow rate and the pressure of $CO_2$ was controlled by adjusting the regulator and the valve. Stirring of the solutions was then started and the chemical reaction took place for 30 min.

In experiments using conventional stripping, a measured volume of organic extract containing acid complexes was added to the milk of lime. Under the stirring condition, the stripping reaction was completed quickly, usually in less than 5 minutes.

### Analysis

The aqueous chloride ion concentration was determined according to the Mohr's method.

The acids chelated with amines in the organic phase were analysed by back titration. The organic sample was first mixed with an excess of NaOH solution to strip out the acids. The aqueous solution was then back titrated to end-point with standard nitric acid.

### Membrane stripping

The membrane stripping experiments were carried out in the stirred cells illustrated schematically in Figure 2, the features of which are as follows:-

18.- magnetic stirrer to mix contents of cells 19 and 20
19.- organic cell
20.- lime cell
21.- membrane
22.- sampling orifices

A membrane 21 was sandwiched between two cylindrical perspex cells 36 mm diameter and 76 mm long. The effective volume of each chamber was 74 ml and the contact area of the membrane with solutions was 10.2 $cm^2$. The solutions in both cells were stirred magnetically at 350 rpm using stirrer 18.

To perform a membrane stripping process, the membrane substrate was first soaked with the impregnating liquid. The organic and lime solutions were placed either side of the membrane. The acid concentration in the organic cell was measured at definite time intervals by removing known volumes with a pipette for analysis and replacing them with the fresh one. The minor error caused in the sampling was corrected in the calculations.

Procedure

25 ml saturated brine was mixed with the organic extractant with stirring at 380 rpm and reacted for 30 min at a $CO_2$ injection rate of 0.48 L/min under a gauge pressure of 20 kPa. The appearance of white $NaHCO_3$ precipitate could be observed clearly. The two phases were then separated and the aqueous phase contained sodium bicarbonate precipitate. The total acids and hydrochloric acid in the organic phase were analysed respectively. In all carbonation experiments, hydrochloric acid took up ca 95% w/w of the total acids. Therefore, for simplicity the total acids in the organic phase were considered as hydrochloric acid only in the following results. The conversion of NaC1 is defined as

$$\varepsilon = \frac{C_{i_NaCl} - C_{NaC1}}{C_{i_NaC1}} = \frac{q C_{\overline{HC1}}}{C_{i_NaC1}} \qquad (4)$$

where $C_{i_NaC1}$, and $C_{NaC1}$ are respectively the NaC1 concentrations in the initial brine and in the aqueous solution after reaction, $C_{\overline{HC1}}$ the HCl concentration in the organic extract and *q* the O/A phase ratio.

Experiment No 1

In the first experiment, using the procedure set out above, 50ml of 50% v/v Primene in n-butanol was used with an O/A phase ratio of 2:1 by volume. A conversion of 39.5% was obtained.

Experiment No 2

For this experiment, the phase ratio was 1:1 with the following extractants tested at 50% v/v Primene in alcohol.

| Alcohol | Conversion (%) |
|---|---|
| n-butanol | 20 |
| n-pentanol | 20.5 |
| n-octanol | 21.5% |

Experiment No 3

For this experiment, the addition of aliphatic hydrocarbons was tested at a phase ratio *of 1:1.* The following diluents were used with 50% v/v Primene and 10% v/v n-octanol in hydrocarbon.

| Hydrocarbons | Conversion (%) |
|---|---|
| n-heptane | 28 |
| n-dodecane | 24 |
| kerosene | 24 |
| Shellsol 2046 | 24 |

Experiment No 4

Using the organic phase obtained from Experiment No 3 in which heptane was used as a diluent the effect of a

variety of milk of lime concentrations were investigated in stripping efficiency. The results are set out below:

| Strip Solution Molarity $Ca(OH)_2$ | Efficiency (%) | Phase Separation |
|---|---|---|
| 0.27 | 40.8 | Good |
| 0.54 | 63.1 | Good |
| 0.81 | 97.6 | Organic phase slightly turbid |
| 1.35 | 97.3 | Emulsion in organic phase |

These experiments showed that the formation of emulsion caused a serious loss of amine.

For the successful operation of the process of the invention, the inorganic acid amine complex must be subjected to the step of regeneration using a membrane. Prior to this step, the aqueous phase containing the sodium bicarbonate is separated from the organic phase containing the inorganic acid amine complex.

The experiments that follow relate to tha regeneration of the amine using membranes.

Experiment No 5

In this experiment, means of reducing carbon dioxide and carbon dioxide species in the organic phase were investigated in order to reduce membrane fouling. In each case, the organic phase used was obtained from Experiment No 3 in which kerosene was the diluent and 1M $Ca(OH)_2$ as the aqueous base.

Air sweeping was carried out in the same reactor used for carbonation. Under the stirred condition, nitrogen or air was injected from the bottom of the reactor, bubbling in the organic phase for half an hour. The evaporative impurities in the extract were stripped out by the flowing air.

In the case of washing, the organic extract and the aqueous solution were magnetically stirred for half an hour to obtain complete mixing. Impurities in the extract could dissolve into water.

In both cases, carbon dioxide and carbon dioxide species were reduced to an extent sufficient to reduce fouling.

In the case of washing, it was found that seawater and brine could be successfully used. Use of brine reduces water consumption. In addition, repeated washing and combined washing and air stripping could be used to enhance removal.

Carbon dioxide and carbon dioxide species in the organic extract can also be removed via vacuum degassing. Incoming organic solution entered the top of a packed column under 11 kPa vacuum. The released carbon dioxide was vacated through a vacuum pump.

Experiment No 6

In this experiment, a series of different membranes were trialed using the stirred cell shown in Fig.2. The properties of these membranes are set out in Table 1.

Table 1

| Properties of Membranes Used | | | | | |
|---|---|---|---|---|---|
| Membrane | Material | Philicity | Thickness (μm) | Pore Size (μm) | Porosity % |
| Durapore GVHP | PVDF | Hydrophobic | 110 | 0.22 | 75 |
| Durapore GVWP | PVDF | Hydrophilic | 110 | 0.22 | 70 |
| PES-2F-PH | PES | Hydrophilic | 110 | 0.2 | ~ 70 |

The extent of the membrane fouling could be determined from the flux change with time and visual observation at the end of the experiments. If the membranes were seriously fouled, the flux decreased quickly and the mass transfer eventually stopped. At the end of the experiments, a layer of cake could be observed on the surface for the fouled membrane.

Experiment (a) The organic extract after carbonation was degassed by injected nitrogen or air by bubbling in the organic extract for 0.5 hours. This procedure removed 20 - 40% of dioxide species. The organic extract was then subjected to membrane stripping.
Using GVHP membrane. no serious fouling occurred over the 18 hour duration of the experiment. Mass transfer flux of 1.65 x $10^{-4}$ mol/$m^2$s was achieved.

Experiment (b) The same procedure as (a) was used but without degassing. Instead, before membrane stripping.

the organic extract was washed with an equal volume of water.
Using GVWP membrane, some loose cake was observed on the membrane surfaces after the 22 hour duration of the experiment. An average mass transfer flux of 3.15 x $10^{-4}$ mol/$m^2$s was achieved.

Experiment (c) In this experiment a combination of degassing and water washing was used.
Using GVWP membrane, an average mass transfer flux of 3.13 x $10^{-4}$ mol/$m^2$s was achieved.
Using PES-2F membrane, an average mass transfer flux of 3.36 x $10^{-4}$ mol/$m^2$s was obtained.

Experiment 7

Crossflow membrane stripping was carried out in the experimental set-up illustrated schematically in Fig. 3, the features of which are as follows:-

23.- temperature controller
24.- alkali solution
25.- organic amine phase
26.- peristalsic pump for organic phase
27.- peristalsic pump for alkali solution
28.- rotameter to measure organic phase flow
29.- speed control for pump 26
30.- rotameter to measure alkali solution flow
31.- speed control for pump 27
32.- membrane module
33.- membrane

The module 32 incorporated two symmetrical channels, each 18.0 cm long, 1.20 cm wide and 0.190 mm deep. The dimensions were measured with a Max-Cal electronic digital caliper (precision: ±0.001 cm). A flat sheet membrane was sandwiched in-between the two halves of the module and sealed by two Viton sheet gaskets. The effective membrane area contacting each solution was 22 $cm^2$. The flowing solutions were circulated by two peristalsic pumps 26,27 (Cole-Parmer). The flow rates were independently controlled by adjusting the rotational speed of the pumps using controllers 29,31. The pressures in both channels could be controlled by adjusting the valves and measured with pressure gauges.

Table 2

| Properties of Membranes Used | | | | | |
|---|---|---|---|---|---|
| **Membrane** | **Material** | **Philicity** | **Thickness (μm)** | **Pore Size (μm)** | **Porosity %** |
| PES-1F | PES | Hydrophilic | ~ 110 | 0.1 | ~ 70 |
| 1E-PP | Polypropylene | Hydrophobic | ~ 100 | 0.1 | ~ 70 |

In crossflow membrane stripping using the experimental set-up shown in Figure 3 and a PES-1F or a 1E-PP membrane, the organic extract was prepared in the same manner as for Experiment 6(b). Membrane characteristics are shown in Table No 2. The organic extract was then subjected to membrane stripping and an average mass transfer flux of 10.0 x $10^{-4}$ mol/$m^2$s for PES-1F and for 1E-PP 8.1 x $10^{-4}$ mol/$m^2$s was obtained. This shows that an increase in flow turbulence enhances mass transfer flux.

Experiment No 8

In this experiment, hollow fibre membranes were used namely Accurel ® PP Q 3/2 (hydrophobic) and Micro PES - 1.5/2 capillary membranes supplied by Akzo Nobel Chemical Ltd. Membrane characteristics are shown in Table 3.

Table 3

| Properties of Membranes Used | | | |
|---|---|---|---|
| **Membrane** | **Inner/Outer Diameter (mm)** | **Pore Size (micron)** | **Porosity** |
| Accurel PP Q3/2 | 0.6/1.0 | 0.2 | ~ 70% |
| Micro PES-1.5/2 | 1.5/2.0 | ~ 0.05 | ~ 70% |

The experimental set-up was as previously used as shown in Fig.3 with the exception that the organic extract was exchanged with saturated brine to remove carbon dioxide before stripping and the module 32 is replaced by a hollow fibre module. The parameter of the hollow fibre modules is shown in Table 4.

Table 4

| Parameter of Hollow Fibre Modules | | | | | |
|---|---|---|---|---|---|
| **Module** | **Membrane** | **No of Fibres** | **Packing Density** | **Effective Area ($cm^2$)** | |
| Module 1 | Q3/2 | 118 | 50% | 587(o.d.) | 352(i.d.) |
| Module 2 | PES-1.5/2 | 30 | 50% | 278(o.d.) | 208(i.d.) |

Organic phase was pumped through the lumen side and milk of lime through the shell side co-currently.

Both membranes performed satisfactorily over 25 hours of operation. It was noted, however, the presence of increasing calcium chloride concentration in the milk of lime during operation caused the pH to decrease which resulted in a reduction in flux. This may be dealt with by removing $Ca^{2+}$ in excess of 1M using for example ion exchange resins or precipitating chemicals.

It will be appreciated by persons skilled in the art that numerous variations and/or modifications may be made to the invention as shown in the specific embodiments without departing from the spirit or scope of the invention as broadly described. The present embodiments are, therefore, to be considered in all respects as illustrative and not restrictive.

<u>References</u>

Note that references in the specification are shown in square brackets.


1. Francis Rauh (FMC Corp.); Sodium carbonate, in J.I. Kroschwitz et al Ed., Kirk-Othmer Encyclopedia of Chemical Technology, 4th ed., Vol. 1, pp1025-1039 (1991).
2. J. Shibata, M. Sakamoto, J. Nakanishi and S. Nishimura, Application of solvent extraction to inorganic synthesys. I. on the chemical and physical properties of high molecular weight alkylamine, Nippon Kogyo Kaishi, 95(1100), 745-749(1979).
3. J. Shibata, M. Sakamoto; J. Nakanishi and S. Nishimura, Application of solvent extraction to inorganic synthesys. II. On the formation of sodium bicarbonate by a process using solvent extraction, Nippon Kogyo Kaishi, 95(1101), 815-820 (1979).
4. Toyo Soda Manufacturing Co., Ltd., Sodium bicarbonate, JP 82 07,826 (1982).
5. Toyo Soda Manufacturing Co., Ltd., Recovery of ammonia, Jpn. Kokai Tokkyo Koho 80,109,219 (1980).
6. Toyo Soda Manufacturing Co., Ltd., Recovery of ammonia in bicarbonate mother liquor from the Solvay process, JP 82 34,020 (1982).
7. Leon Ninane, C. Breton and C. Guerdon (Solvay et Cie.), Device and method for producing an organic solution of a water-insoluble organic base, DE 3,415,303 (1984).
8. Leon Ninane, C. Breton and C. Guerdon (Solvay et Cie.), Process and installation for the production of an organic solution of a water-insoluble organic base, US 4,605,771 (1986).
9. Leon Ninane and C. Breton (Solvay et Cie.), Preparation of a water-insoluble nitrogen-containing organic base from a soluble hydrochloride, FR 2,567,879 (1986).
10. Leon Ninane and C. Breton (Solvay et Cie.), Purification of water-insoluble, nitrogen-containing organic base by removal of dissolved alkaline earth metals and production of alkali metal bicarbonates, FR 2,590,495 (1987).
11. Leon Ninane and C. Breton (Solvay et Cie.), Preparation of aqueous sodium chloride solution and production of sodium bicarbonate, FR 2,590,561 (1987).
12. Leon Ninane and C. Breton (Solvay et Cie.), Separation of water-insoluble amines from aqueous slurries in the manufacture of alkali metal bicarbonates, EP 266,830 (1988).
13. Leon Ninane and C. Breton (Solvay et Cie.), Separation of alkali metal bicarbonate particals from an adsorbed layer of amine hydrochloride, EP 266,831 (1988).
14. M. Hussien and A.A. Zatout (Alexandria Univ., Egypt), Complete and partial replacement of ammonia by octylamine in Solvay process, Chem. Petro-Chem. J., 12(1), 35-40(1981).
15. W.B. Yang; J. Wang, J. Ma and X. Wang, A new technology for the manufacture of soda ash by extraction, Shanxi Daxue Xuebau, Ziran Kexueban, 17, 46-49(1982).
16. Z. Xu, S. Huang and Y. Shi, A study of the carbonation mechanism of soda production by the tertiary amine method, Chem, Reaction Eng. & Tech.; 5(3), 72-78(1989).
17. Z. Xu, S. Huang and Y.Shi, Thermodynamics of the carbonation process in soda manufacture with amines,

Huadong Huagong Xueyuan Xuebao (J. East China Institute of Chem. Tech.). 14(5), 605-613(1988).
18. Z. Xu, S. Huang and Y. Shi. Carbonation process and its methematical model in soda manufacture with amines, Huadong Huagong Xueyuan Xuebao (J. East China Institute of Chem. Tech.), 14(5), 614-620(1988).
19. Z. Xu, S. Wuang R. Zhang and Y. Shi, laboratory study of the production of soda using amines, Huadong Huagong Xueyuan Xuebao (J. East China institute of Chem. Tech.), 16(1), 21-26(1990).
20. Z. Xu and Y.Shi, Study on a new method of direct production of sodium bicarbonate, Chem. Reaction Eng. Tech., 4(4), 53-59(1988).
21. Z. Xu and Y. Shi, Study of the structure of extractive complex in soda producing by tertiary amine method, J. Chem. Eng. of Chinese Universities, 3(2), 78-83(1989).
22. Robert Kunin, Ion exchange in chemical synthesis, Ind. Eng. Chem., 56, 35-39(1964).
23. T.B.S. Giddey (Klipfontein Organic Products Corp. Ltd.), Alkali metal carbonate, S.African ZA/78 05,962 (1981).
24. R.D.A. Woode (Brunner Mond & Co Ltd), Production of alkali metal carbonates, Patent: PCT/GB92/02184, WO 93/11.71, (1993).

## Claims

**1.** A method of producing an alkali metal bicarbonate or carbonate comprising:

(a) introducing carbon dioxide into an aqueous solution of an alkali metal salt in contact with an organic amine-containing phase so as to form an alkali metal bicarbonate or carbonate in the aqueous phase and an amine inorganic acid complex in the organic phase;
(b) separating the organic phase from the aqueous phase;
(c) recovering the alkali metal bicarbonate or carbonate from the aqueous phase:
(d) optionally, converting the so-recovered alkali metal bicarbonate into an alkali metal carbonate; and
(e) contacting one face of a membrane with the organic phase whilst contacting the other face of the membrane with an aqueous base so as to regenerate an amine-containing organic phase from the amine inorganic acid complex for use in (a).

**2.** A method of producing an alkali metal bicarbonate as in claim 1 wherein the alkali metal bicarbonate is recovered from the aqueous phase.

**3.** A method of producing an alkali metal carbonate as in claim 1 wherein the alkali metal carbonate is formed in step (a) and is recovered from the aqueous phase.

**4.** A method of producing an alkali metal carbonate as in claim 1 wherein an alkali metal bicarbonate is formed in step (a), recovered from the aqueous phase and converted into an alkali metal carbonate.

**5.** A method as in any one of claims 1 to 4 wherein the organic phase includes a primary amine, preferably having about 12-24 carbon atoms.

**6.** A method as in any one of claims 1 to 5 wherein an alcohol is included in the organic phase, preferably having greater than 4 carbon atoms, most preferably being octanol.

**7.** A method as in any one of claims 1 to 6 wherein an aliphatic hydrocarbon is included in the organic phase, preferably having 12 carbon atoms or less, most preferably 7-12 carbon atoms.

**8.** A method as in claim 7 wherein a mixture of hydrocarbons is included, preferably kerosene.

**9.** A method as in any one of claims 1 to 8 wherein the aqueous solution of an alkali metal salt is brine.

**10.** Method for regenerating an amine-containing organic phase from an organic phase containing an amine/inorganic acid complex produced by introducing carbon dioxide into an aqueous solution of an alkali metal salt in contact with an organic amine-containing phase, the regeneration method including the step of contacting one face of a membrane with the organic phase containing an amine/inorganic acid complex whilst contacting the other face of the membrane with an aqueous base.

**11.** A method as in any one of claims 1 to 10, wherein the membrane has a pore size of 0.01-0.5 microns, preferably

0.05-0.3 microns.

**12.** A method as in any one of claims 1 to 11, wherein the membrane has preferably a porosity of 70% or higher.

**13.** A method as in any one of claims 1 to 12, wherein the membrane is hydrophobic, or hydrophilic, preferably highly hydrophilic. or is a composite membrane comprising a hydrophilic substrate with a hydrophobic top layer.

**14.** A method as in any one of claims 1 to 12, wherein the membrane is a flat sheet membrane or a hollow fibre membrane.

**15.** A method as in any one of claims 1 to 14, wherein the membrane has a wall thickness of 25-500 microns, preferably 50-200 microns.

**16.** A method as in any one of claims 1 to 15, wherein prior to regeneration carbon dioxide and carbon dioxide species, if present are removed from the organic amine-containing phase.

**17.** A method as in claim 16, wherein removal is accomplished by contacting the organic amine-containing phase with brine, preferably saturated brine.

**18.** A method as in any one of claims 1 to 17, wherein milk of lime is used as the aqueous base.

**19.** A method as in claim 18 wherein $Ca^{2+}$ in excess of 1M formed during regeneration is removed.

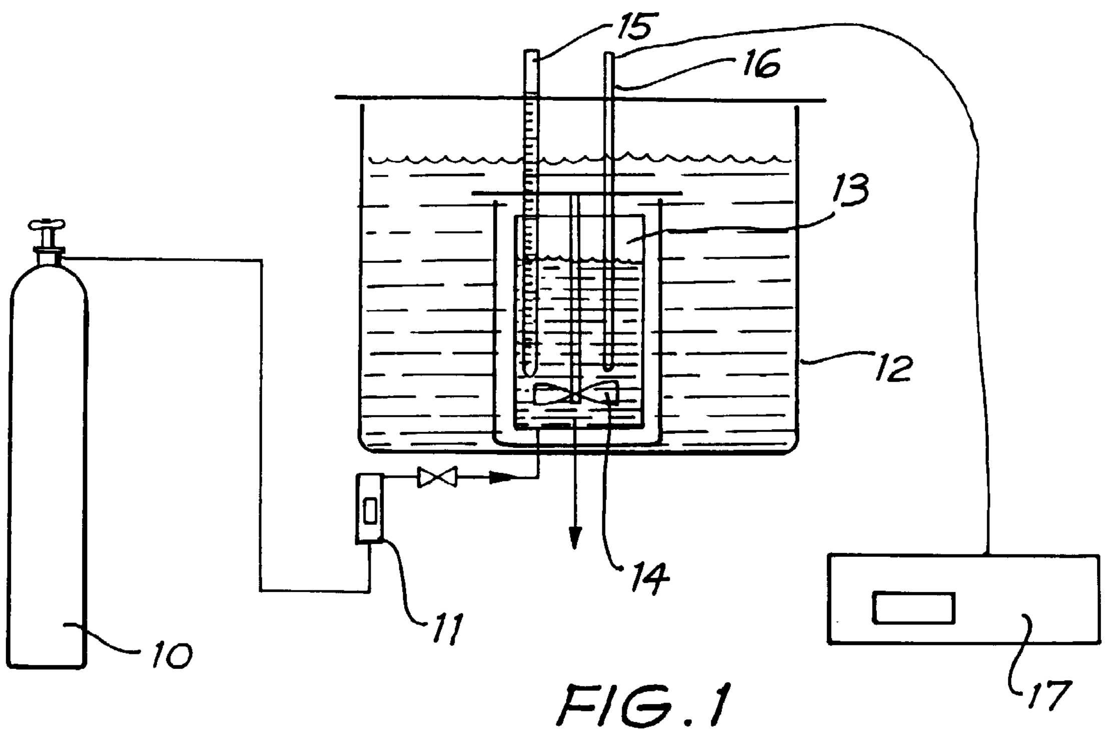


FIG.1

FIG. 2

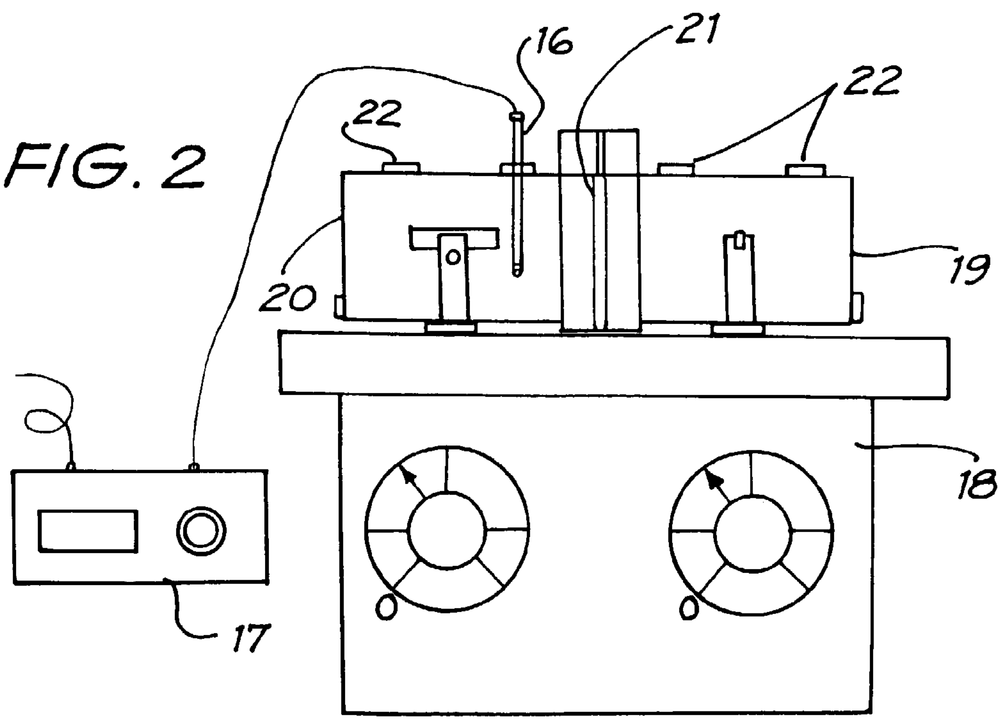

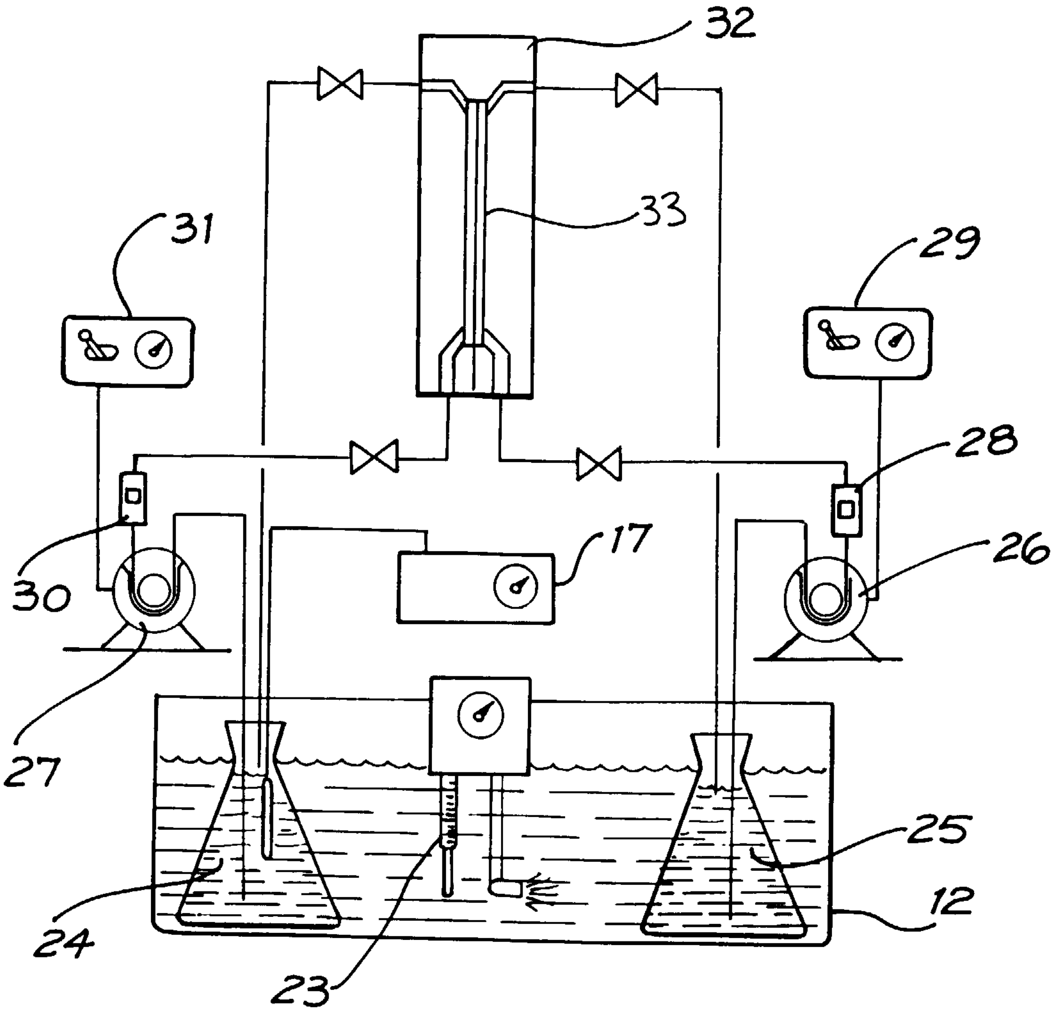


FIG. 3

European Patent Office

# EUROPEAN SEARCH REPORT

Application Number
EP 96 40 0272

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | EP-A-0 171 106 (SOLVAY) 12 February 1986<br>* page 7, line 24 - page 10, line 23 *<br>--- | 1-5,9,10 | C01D7/16 |
| D,A | DATABASE WPI<br>Week 8208<br>Derwent Publications Ltd., London, GB;<br>AN 14689<br>XP002002078<br>& JP-A-57 007 826 (TOYO SODA MFG KK) , 16 January 1982<br>* abstract *<br>--- | 1-5,9,10 | |
| D,A | EP-A-0 266 830 (SOLVAY) 11 May 1988<br>* page 2, line 3 - line 12 *<br>* page 3, line 35 - page 4, line 39 *<br>----- | 1-5,9,10 | |

TECHNICAL FIELDS SEARCHED (Int.Cl.6)

C01D

The present search report has been drawn up for all claims

| Place of search | Date of completion of the search | Examiner |
|---|---|---|
| THE HAGUE | 6 May 1996 | Van der Poel, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)